# EUROPÄISCHE PATENTANMELDUNG

(11) **EP 1 055 386 A1**
(43) Veröffentlichungstag der Anmeldung: **29.11.2000**
(21) Anmeldenummer: 99810453.3
(22) Anmeldetag: 25.05.1999
(51) Int. Cl.: A47J 31/00

(54) **Heisswasseraufbereiter**

(71) Anmelder: Wolf, Roland, 9404 Rorschacherberg (CH)
(72) Erfinder: Wolf, Roland, 9404 Rorschacherberg (CH)
(74) Vertreter: Riederer, Conrad A., Dr.

(57) **Zusammenfassung**

Bei einem Automaten für heisse Getränke für den Einbau in ein Fahrzeug, welcher an die 12 bzw. 24 Volt Gleichstromquelle des Fahrzeugs angeschlossen werden kann, ist ein Niedervoltboiler (57) vorgesehen, in welchem mit 1 bzw. 2 12 Volt Heizelementen ca. 3,5 dl Wasser aufgeheizt werden können. Diese Menge an Heisswasser genügt, um eine bis zwei Portionen Heisswasser innert kürzester Zeit in ein Gefäss (21) abgeben zu können. Die Steuerung der Wassermenge erfolgt über eine Pumpe (55) und ein Ventil (59). Als Frischwasservorrratsbehälter (13) dient eine handelsübliche PET-Flasche, auf deren genormte Ausgussöffnung ein Anschlussventil (53) aufgeschraubt ist. Als Vorratsbehälter (17) für das Kaffeeextraktganulat dient eine handelsübliche Kaffeepulverdose. Der Aromaverschluss der Dose wird während dem Aufstecken der Dose (17) auf den Anschlussstutzen (19) durch den im Stutzen (19) angeordneten Öffner (65) durchbrochen. Das Gefäss, in welches das heisse Wasser gefüllt wird, ist durch einen Bügel (25) unter dem Wasserhahn (61) festgehalten. Der Bügel (25) kann auf Tastendruck hin geöffnet und geschlossen werden.

## Beschreibung

Die Erfindung betrifft einen Heisswasseraufbereiter mit einem Anschlussstück für den Anschluss eines vorzugsweise vom Heisswasseraufbereiter lösbaren Frischwasserbehälter zur Bevorratung von Trinkwasser an eine Verbindungsleitung, der Verbindungsleitung, welche das Anschlussstück mit einem Hahn zum Auslassen des Wassers verbindet und dem Hahn, einem elektrischen Heizelement zwischen Anschlussstück und Hahn zum Heizen des Trinkwassers, einem Stromanschluss und Bedienungselementen zum Bedienen des Geräts. Insbesondere betrifft die Erfindung einen Automaten für heisse Getränke, Suppen und dergleichen, mit einem solchen Heisswasseraufbereiter, mit einer Aufnahmeeinrichtung für ein das Heisswasser empfangendes Gefäss, einem Anschlussstutzen für einen Vorratsbehälter für ein wasserlösliches Granulat, einer Zuführeinrichtung für das Granulat, insbesondere mit einer Förderschnecke, und einer Zufuhröffnung für das Granulat in Nachbarschaft zum Hahn.

Heisswasseraufbereiter und Automaten für heisse Getränke und Suppen besitzen in der Regel einen Starkstromanschluss mit gewöhnlich 240 V und einer Versorgungsleistung von wenigsten 6 A. Damit kann das Wasser sehr rasch auf eine Temperatur von über 60°C bis 95°C erhitzt werden. Mit einem Starkstrom-Durchlauferhitzer von um 1000 Watt kann stets die gewünschte Menge an Heisswasser in relativ kurzer Zeit zur Verfügung gestellt werden.

In Motorfahrzeugen mit Verbrennungsmotoren steht gewöhnlich jedoch eine Stromquelle mit 12 oder 24 Volt zur Verfügung. Um eine Leistung von um ca. 1000 Watt zu erreichen, müssten besondere Leitungen und Sicherungen installiert werden. Bekannte Heisswasseraufbereiter in Getränkeautomaten, welche für den Anschluss an eine Niedervoltquelle, d.h. für einen Anschluss an eine Kraftfahrzeugbatterie oder das Stromversorgungssystem eines Kraftfahrzeugs vorgesehen sind, sind daher mit einem Durchlauferhitzer mit geringem Wasserdurchsatz versehen. Beim Befüllen eines Trinkgefässes mit heissem Wasser dauert der Füllvorgang einige Sekunden bis zu einer Minute. In dieser Zeit tropft das erhitzte Wasser in das Trinkgefäss und kühlt darin wieder ab. Die gewünschte Temperatur des Getränkes von ca. 70 bis 80°C wird daher nicht erreicht.

Weiter weisen Automaten für heisse Getränke oder Suppen einen Wasservorrat in einem Behälter auf. Dieser Behälter entleert sich selbstverständlich durch den Gebrauch des Automaten, so dass er von Zeit zu Zeit wieder aufgefüllt werden muss. Um bei herkömmlichen Automaten den Wasservorrat aufzufüllen, muss Trinkwasser von der Wasserversorgung oder einer anderen Trinkwasserquelle besorgt werden und in den Behälter nachgefüllt werden. Dazu kann der Behälter vom Automaten abnehmbar sein. In ähnlicher Weise muss auch ein Vorratsbehälter für das dem Wasser zuzusetzende Granulat, z.B. Kaffeeextrakt, Suppenpulver, Granulat aus gefriergetrocknetem Tee, etc. gelegentlich mit dem Inhalt aus Nachfüllbeuteln etc. nachgefüllt werden. Solche Vorratsbehälter von Automaten sind empfindlich auf Verunreinigungen, wie z.B. Algenbildung oder Kalkablagerungen bei Wasserbehältern oder Verkrustungen durch feucht gewordenes Granulat bei Granulatbehältern. Daher müssen die Vorratsbehälter regelmässig gereinigt werden.

Es ist Aufgabe der Erfindung einen Heisswasseraufbereiter, insbesondere einen Automaten für heisse Getränke und Suppen etc. vorzuschlagen, welcher in einem Automobil oder Lastkraftwagen angeschlossen und benutzt werden kann. Er soll mit der dort vorhandenen Stromquelle auskommen und z.B. am Zigarettenanzünder angeschlossen werden können. Der Heisswasseraufbereiter soll auf Wunsch wenigstens einen Becher von 150 ml innerhalb einer von der Pumpenleistung abhängigen Zeit, z.B. weniger als 5 Sekunden, mit einem Strahl von wenigstens 60°C, vorzugsweise 80 bis 90°C heissem Wasser füllen können. Der Vorrat an Trinkwasser und allenfalls der Vorrat an dem Wasser zuzufügendem Granulat soll in einer Weiterentwicklung der Erfindung zudem einfach nachfüllbar, die Vorrathaltung absolut hygienisch sein. Das Gerät soll möglichst einhändig und einfach bedienbar sein und kaum Wartung verlangen.

Erfindungsgemäss weist ein Heisswasseraufbereiter oder Automat für heisse Getränke und Suppen der eingangs erwähnten Gattung einen zwischen Anschlussstück und Hahn in die Verbindungsleitung eingefügten Heisswasserbehälter zur Bevorratung von Heisswasser und wenigstens ein Niedervolt-Heizelement im Heisswasserbehälter auf. Dieser Heisswasserbehälter oder Boiler ist zweckmässigerweise isoliert. Der Boiler kann durch Einschäumen mit einem härtenden Kunststoffhartschaum gleichzeitig wärmegedämmt und in einem Gerät fixiert werden. Vorteilhaft ist der Heisswasserbehälter doppelwandig, wie dies beispielsweise von Behältern in Thermosflaschen bekannt ist. Es kann ein für Thermosflaschen verwendeter Norm-Behälter in die Verbindungsleitung eingesetzt sein. Eine kostengünstigere Variante ist eine konservendosenartige Büchse , welche mit Schaumstoff isoliert ist. Zweckmässigerweise weist der Heisswasserbehälter eine Wasserzuleitung und eine Wasserableitung auf, welche an einander gegenüberliegenden Enden des Innenraums des Behälters mit diesem in Beziehung stehen. Es kann beispielsweise der Warmwasserauslass aus dem Boiler durch ein Rohr gebildet sein, welches am Kaltwassereinlass vorbei auf die diesem gegenüberliegende Seite des Heisswasserbehälters geführt ist und dort eine Verbindungsöffnung zum Heisswasserbehälterinnenraum aufweist. Dadurch können die Durchdringungspunkte von Zu- und Ableitung durch die Wandung des Heisswasserbehälters nahe beieinander in der gleichen Wandungsfläche angeordnet sein, während der Eintrittsort des kalten Wassers möglichst weit entfernt vom Austrittsort des heissen Wassers liegt.

Bei einem solchen Heisswasseraufbereiter mit zusätzlich einer Auf nahmeeinrichtung für ein das Heisswasser empfangendes Gefäss, z.B. einer Auflagefläche oder Halterung für einen Becher, einem Anschlussstutzen für einen Vorratsbehälter für ein wasserlösliches Granulat, einer Zuführeinrichtung für das Granulat, insbesondere mit einer Förderschnecke, und einer Zufuhröffnung für das Granulat in Nachbarschaft zum Hahn, wird bevorzugt, wenn der Anschlussstutzen, welcher der Aufnahme des vom Heisswasseraufbereiter lösbaren Vorratsbehälters für das Granulat dient, einen Verschlussmechanismus aufweist, der dem eines Deckels einer handelsüblichen Dose entspricht. Handelsübliche Dosen sind beispielsweise Kaffeeextraktdosen etc., wie sie zur Zeit in den Verkaufsregalen stehen. Durch die Übereinstimmung des Verschlussmechanismus von Deckel und Anschlussstutzen können handelsübliche Dosen als Vorratsbehälter verwendet werden. Die Dose kann daher nach vollständiger Entleerung, oder wenn der Inhalt verdorben ist, durch eine neue ersetzt werden. Eine Reinigung eines solchen Vorratsbehälters kann somit entfallen, nicht hingegen bei einem Vorratsbehälter, welcher Bestandteil des Geräts ist.

Die Aufnahmeeinrichtung für das zu befüllende Gefäss ist vorteilhaft mit einem beweglichen Bügel ausgerüstet, welcher in einer ersten Stellung das Gefäss hält und in einer zweiten Stellung das Gefäss freigibt. Der Bügel ist dabei vorzugsweise um eine Achse parallel zu einer Mittelachse durch die Öffnung des Gefässes verschwenkbar. Für die Verschwenkung ist zweckmässigerweise ein mit den Bedienungselementen betätigbarer Aktor vorgesehen. Dieser Aktor soll den Bügel in die eine bzw. andere Richtung verschwenken und in der verschwenkten Stellung halten. Mit einer solchen Halterung ist gewährleistet, dass das Gefäss auch bei Erschütterungen, wie sie in einem Fahrzeug unweigerlich auftreten, an der vorgesehenen Stelle positioniert bleibt.

Wird bei einem Heisswasseraufbereiter ein Vorratsbehälter für ein dem heissen Wasser zuzusetzendes Granulat verwendet, welcher Behälter mit einem Aromaverschluss versiegelt ist, so ist im Anschlussstutzen vorteilhaft ein Öffner vorgesehen, mit welchem der Aromaverschluss des Vorratsbehälters aufgebrochen werden kann. Als Aromaverschluss wird dabei ein zwischen Deckel und Behälteröffnung angeordneter Verschluss verstanden, welcher z.B. aus einer Folie oder einem Papier besteht, welche oder welches die Behälteröffnung aromadicht abschliesst. Der Aromaverschluss stellt in unversehrtem Zustand eine Garantie bezüglich des Inhalts des Behälters dar. Der Behälter mit intaktem Aromaverschluss kann ohne Risiko eines Verschüttens des Inhalts auf den Kopf gestellt werden. Ein zweckmässiger Öffner wird weiter unten genauer beschrieben.

Ist der Heisswasseraufbereiter nicht mit einem Trinkwasser-Leitungsanschluss ausgerüstet, sondern mit einem Frischwasserbehälter und einem am Anschlussstück anschliessbaren Anschlussventil am Frischwasserbehälter, so ist der Frischwasserbehälter vorteilhaft eine handelsübliche Mineralwasserflasche, z.B. eine PET-Flasche. Dabei weist das Anschlussventil zweckmässigerweise ein Innengewinde und eine Dichtung auf, welches Gewinde sich auf das Normgewinde der Flaschenöffnung aufschrauben lässt, und welche Dichtung einen wasserdichten Anschluss an die Wasserflasche gewährleistet. Dank einem solchen Anschlussventil lassen sich in jedem Lebensmittelgeschäft oder Kiosk Wasserflaschen kaufen, welche ein entsprechendes Normgewinde aufweisen und sich daher als Wasservorratsbehälter verwenden lassen. Die Verwendung von handelsüblichen Wasserflaschen weist nicht nur den Vorteil auf, dass das Wasser mit Garantie hygienisch einwandfrei ist und der Behälter nie gesäubert zu werden braucht, sondern es können auch Flaschen jeder gerade erhältlichen Grösse, z.B. 330 ml, 1,5l oder Zwischengrössen, in den Heisswasseraufbereiter eingesetzt werden. Es müssen dabei lediglich die Gewinde dieser Flaschen, wie zur Zeit üblich ist, einheitliche Masse aufweisen, so dass sie alle mit dem Anschlussventil kombinierbar sind.

Vorteilhaft ist die Öffnung des Anschlussstückes am Heisswasseraufbereiter bei gebrauchsfähig aufgestelltem Heisswasseraufbereiter nach oben offen. Die Flasche wird dann mit dem Anschlussventil nach unten gerichtet auf das Anschlussstück gesetzt. Durch das Aufsetzen wird das Ventil geöffnet, so dass Wasser aus dem Behälter in das anschliessende Leitungssystem fliessen kann.

Vorteilhaft weist der Heisswasseraufbereiter eine Wasserpumpe zur Förderung von Wasser vom Anschlussstück zum Hahn und eine Steuerung der Wasserpumpe auf. Die Steuerung regelt dabei zweckmässigerweise, dass bei einer Aktivierung der Wasserpumpe eine bestimmte, auf das Volumen des das Heisswasser empfangenden Gefässes abgestimmte Menge Trinkwasser durch das System gefördert wird. Die Menge kann bei bekannter Förderkapazität der Pumpe durch einen Zeitschalter bestimmt werden. Vorteilhaft können mit der Steuerung verschiedene Mengen bestimmt werden. Die Pumpe ermöglicht neben obiger Kopfüberanordnung der Flasche im Anschlussstück auch jede andere Anordnung. Die Flasche kann daher horizontal, geneigt oder aufrecht stehend an das Anschlussstück angesetzt werden. Bei diesen Lagen der Flasche wird z.T. ein Ansaugschlauch am Anschlussventil benötigt, dessen Öffnung an den tiefsten Punkt der Flasche zu liegen kommt. Ein Anschlussventil mit Anschlussschlauch kann auch ohne Ventilfunktion zweckdienlich sein. Damit im Frischwasserbehälter durch das Abführen von Wasser nicht ein Unterdruck entsteht, ist dieser mit einer Luftzufuhröffnung versehen. Die Luftzufuhr in den Innenraum des Frischwasserbehälters kann durch eine durch das Anschlussventil hindurchführende Luftzufuhrröhre geschehen, deren Öffnung in den mit Luft gefüllten Bereich des Frischwasserbehälters reicht.

Vorteilhaft weist der Heisswasseraufbereiter einen Thermostaten im Heisswasserbehälter auf, welcher das Niedervolt-Heizelement oder die Heizelemente abhängig von der Wassertemperatur im Heisswasserbehälter ein- bzw. ausschaltet. Zudem ist eine Anzeige am Heisswasseraufbereiter zweckmässig, welche die Heisswassertemperatur wenigstens qualitativ anzeigt. Die Anzeige kann z.B. durch eine grüne und eine rote Lampe geschehen. Die grüne Lampe leuchtet auf, sobald das Wasser im Boiler eine bestimmte Temperatur erreicht hat, z.B. 60, 75 oder 90°C. Die rote Lampe leuchtet auf, sobald diese Temperatur unterschritten wird, die Heizelemente jedoch dabei sind, das Wasser aufzuwärmen. Dadurch ist für den Konsumenten, z.B. den Fahrer eines Lastkraftwagens mit einem solche Getränkeautomaten, sofort sichtbar, ob der Automat eingestellt ist und ob er bereit ist, so dass z.B. ein heisser Kaffee in den Becher eingelassen werden kann.

Zweckmässigerweise weist ein solcher als Getränkeautomat ausgerüsteter Heisswasseraufbereiter ein Vorratsfach für Becher und allenfalls wenigstens ein Vorratsfach für Besteck auf. Diese Fächer sind vorteilhaft in bekannter Weise einhändig bedienbar ausgelegt.

Ein an einem passenden Anschlussstück eines Heisswasseraufbereiters anschliessbares Anschlussventil weist flaschenseitig vorteilhaft einen Kupplungsbereich, z.B. ein Innengewinde, und eine Dichtung auf. Das Gewinde soll dabei auf das Normgewinde der Flaschenöffnung einer handelsüblichen Getränkeflasche, insbesondere einer PET-Flasche, aufschraubbar sein. Das Anschlussventil für eine Flasche mit Kronenverschluss muss entsprechend auf eine Kronenverschlussöffnung aufsetzbar sein. Die Dichtung soll einen wasserdichten Anschluss an die Flasche gewährleisten. Ein solches Anschlussventil ermöglicht die Verwendung von Wegwerfflaschen und Pfandflaschen mit Normverschlüssen als Vorratsflaschen für den Trinkwasservorrat bei Getränkeautomaten und Heisswasseraufbereitern. Die Luftzufuhr zur Vermeidung von Unterdruck in der Flasche kann durch das Anschlussventil hindurch geschehen. Bei der Verwendung von dünnwandigen PET-Flaschen kann eine Luftöffnung in die Flaschenwandung gestochen werden. Zum Stechen der Öffnung wird vorteilhaft ein Flaschenhalter verwendet, welcher dank einem Federzug mit einer Spitze die Flaschenwandung oberseitig durchstösst und die Flasche gleich auch noch in Position hält.

Vorteilhaft werden daher handelsübliche Getränkeflaschen mit einer Normausgussöffnung, insbesondere Mineralwasserflaschen, vorzugsweise PET-Flaschen, mit einem Gewindeverschluss oder Kronenverschluss, als Vorratsbehälter für Trinkwasser für einen Heisswasseraufbereiter verwendet.

Zudem werden vorteilhaft handelsübliche Dosen als Vorratsbehälter für das Kaffeeextraktgranulat in einer Kaffeemaschine verwendet. Solche Dosen sind in der Regel mit einem Aromagarantieverschluss versiegelt. Zum Öffnen dieser Folie oder dieses Papiers ist im Anschlussstutzen ein Öffner vorgesehen. Dieser Öffner für den Aromaverschluss bei handelsüblichen Kaffeeextraktdosen, welcher in einen Anschlussstutzen oder Deckel für die Dose einfügbar ist, ist erfindungsgemäss mit einer Auf brechspitze oder -kante und zwei einander gegenüberliegenden von der Aufbrechspitze oder -kante zurück und auseinander verlaufenden Spreizflächen ausgerüstet.

Der Öffner kann daher V-förmig sein. Vorteilhaft ist der Öffner aber Y-förmig, wobei die Aufbrechspitze oder -kante den Stamm bildet, von welchem die Spreizflächen V-förmig abstehen. Vorteilhaft weist die Aufbrechkante eine Länge und weisen die Spreizflächen eine Breite von etwa einem Fünftel bis der Hälfte der Öffnungsweite der mit einem zu öffnenden Aromaverschluss versiegelten Dosenöffnung auf. Dabei verläuft die Auf brechkante zweckmässigerweise in Richtung der Breite der Spreizflächen. Durch diese Formgebung wird beim Einfügen der Dose in den mit dem Öffner ausgerüsteten Anschlussstutzen die Verschlussfolie etwa mittig mit der Spitze oder Kante des Öffners durchstossen. Beim weiteren Eindringen des Öffners in die Öffnung wird die Folie in dem aufgeschnittenen Bereich mit den Spreizflächen auseinandergeschoben. Die durch die Folie hindurch in die Öffnung eingeführten, V-förmigen Spreizflächen drücken die Folie auf zwei entgegengesetzte erste Richtungen beiseite und schaffen zwischen den Spreizflächen zwei senkrecht zu den ersten Richtungen gerichtete, dreieckige Austrittöffnungen für das Granulat.

Ein Verfahren zum Anschliessen eines mit einer über die Behälteröffnung gespannten Aromaverschlussfolie versiegelten Vorratsbehälters für ein wasserlösliches Granulat an einen Anschlussstutzen eines Automaten ist erfindungsgemäss dadurch gekennzeichnet, dass der Vorratsbehälter mit der Aromaverschlussfolie nach unten von oben über eine Aufbrechspitze oder -kante im Anschlussstutzen gesenkt und im Anschlussstutzen verriegelt wird.

Vorteilhaft wird die Aromaverschlussfolie beim Absenken des Behälters durch die Aufbrechspitze oder -kante teilweise zerschnitten. Beim weiteren Absenken werden anschliessend die beiden Schnittkanten und die daran anschliessenden Folienabschnitte durch Spreizflächen in entgegengesetzte Richtungen auseinandergespreizt. Dadurch entsteht eine Öffnung beidseitig der Spreizflächen im Dreieck zwischen den Spreizflächen und der Ebene des Aromaverschlusses. Durch diese Öffnung kann nun das im Behälter vorliegende Granulat aus diesem austreten.

Das Kernstück der Erfindung ist ein Heisswasserbehälter zur Erwärmung und Bevorratung von Heisswasser mit wenigstens einem Niedervolt-Heizelement. Dieser ist in Heisswasseraufbereitern integrierbar und z.B. mit Batteriestrom betreibbar. Vorzugsweise ist das Niedervolt-Heizelement haarnadelförmig, d.h. es macht eine einzige Schlaufe so, dass der eine Stromanschluss am einen Ende und der andere Stromanschluss am andern Ende der Schlaufe nebeneinander liegen. Dabei ist es für eine Spannung von 12 Volt und eine Heizleistung von 120 bis 180 Watt, vorzugsweise 140 bis 180 Watt ausgelegt. Der Behälter kann sowohl mit einem einzigen als auch mit zwei Heizelementen ausgerüstet sein, je nach dem ob die Versorgungsspannung 12 oder 24 Volt ist.

Der Heisswasserbehälter weist vorteilhaft ein Inhaltvolumen zwischen 200 und 500 ml, vorzugsweise zwischen 250 und 400 ml, besonders bevorzugt zwischen 300 und 380 ml auf. Er ist dadurch in der Lage zwischen zwei Heizperioden eine oder zwei Portionen heissen Wassers liefern zu können. Wesentlich grössere Volumen würden den Zweck der Erfindung deshalb nicht erfüllen, weil die Heizleistung oder die Heizdauer dadurch unnötig erhöht würden. In der Regel wird in einem Fahrzeug lediglich eine einzelne Portion bezogen, da z.B. ein Fernfahrer oder Vertreter alleine in seinem Fahrzeug sitzt, bzw. ein Beifahrer gut eine gewisse Zeit warten kann, bis sein Kaffeewasser bereit ist.

In den ein Ausführungsbeispiel der Erfindung darstellenden Figuren zeigt
- Figur 1:: eine perspektivische Skizze eines Getränkeautomaten,
- Figur 2:: eine schematische Darstellung eines Niedervolt-Getränkeautomaten mit einem erfindungsgemässen Heisswasseraufbereiter,
- Figur 3:: einen Längsschnitt durch einen Niedervolt-Boiler,
- Figur 4:: einen Querschnitt durch den Niedervolt-Boiler von Figur 2,
- Figur 5:: eine perspektivische Skizze eines Öffners.
- Figur 6:: einen schematischen Schnitt durch ein Anschlussventil.

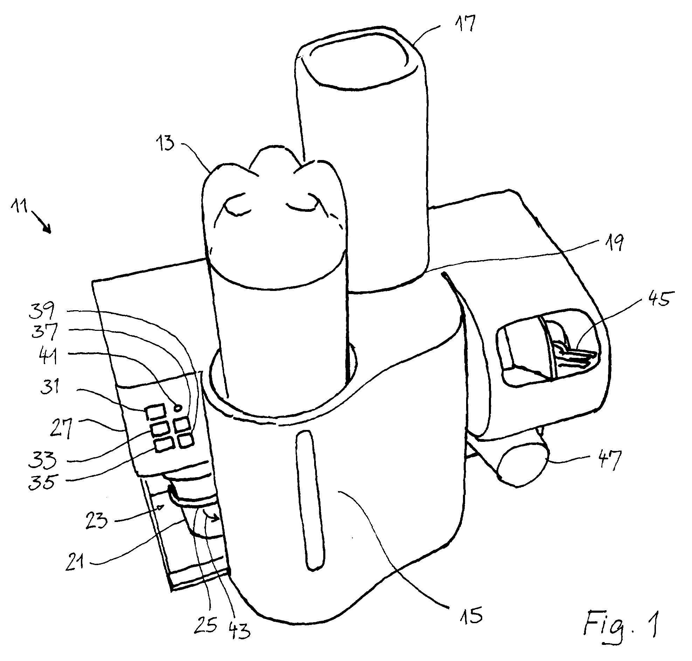

Der in **Figur 1** dargestellte Automat 11 für heisses Wasser oder heissen Kaffee weist in seinem Innern einen Heisswasseraufbereiter mit einem ca. 3,5 dl grossen Boiler auf. Das darin aufgeheizte Wasser stammt aus einer 1,5 l PET-Flasche 13. Diese steht kopfüber in einem dafür vorgesehenen Flaschenfach 15. Auf das Gewinde der Ausgussöffnung der Flasche 13 ist ein Anschlussventil geschraubt, welches in einem Anschlussstück am Boden des Flaschenfachs 15 steckt. Das Wasser wird durch eine Pumpe zu einem Hahn über dem Becher 21 gepumpt.

Weiter ist eine Kaffeedose 17 mit einem Granulat aus gefriergetrocknetem Kaffeeextrakt an das Gerät 11 angeschlossen. Diese Dose 17 ist ebenfalls kopfüber, d.h. mit der Öffnung nach unten in einen Anschlussstutzen 19 gestellt. Der Stutzen 19 weist einen Verschlussmechanismus auf, der dem Deckel der Dose 17 entspricht. Dieser ist vorteilhaft so ausgebildet, wie dies bei bekannten Dosen der Fall ist, dass die Dose und der Deckel oder der Anschlussstutzen 19 lediglich zusammengesteckt zu werden brauchen, das Lösen von Dose 17 und Anschlussstutzen 19 voneinander jedoch ein Verdrehen der Dose 17 gegenüber dem Stutzen 19 erfordert. Anschliessend an den Stutzen 19 ist eine Fördereinrichtung angeordnet, welche bei Bedarf eine Portion Granulat zum Becher 21 befördert.

Der Becher 21 steht in einer Nische 23. Die Nische ist überdeckt und auf zwei Seiten hin offen. Der Becher 21 wird durch einen beweglichen Bügel 25 in der Nische 23 unter dem Hahn und der Zufuhröffnung für das Granulat gehalten. Im die Nische 23 überdeckenden Teil 27 sind neben Hahn und Zufuhröffnung auch die Bedienungselemente 31 bis 39 und die Anzeigelampe 41 integriert.

Mit der Taste 31 kann der Bügel 25 bedient werden. Ist dieser bei Betätigung der Taste 31 in geöffneter Stellung, schliesst er, ist er in geschlossener Stellung, öffnet er in Richtung des Pfeiles 43. Die Tasten 33 und 35 lösen das Befüllen des Bechers 21 mit einer grossen bzw. kleinen Portion Kaffee aus, die Tasten 37 und 39 das Befüllen des Bechers mit einer grossen bzw. kleinen Portion Wasser. Somit kann mit dem Automaten 11 auch ein Becher Tee, eine Bouillon oder ein Fertiggericht zubereitet werden, je nach dem was sich in dem Gefäss 21 unter dem Hahn befindet und welche Taste gedrückt wird.

Auf der rechten Seite des Automaten 11 sind Vorratsfächer für Besteck 45 und Becher 47 vorgesehen. Für Besteck können unterschiedlich tiefe Fächer, z.B. für Gabeln, grosse und kleine Löffel vorgesehen sein.

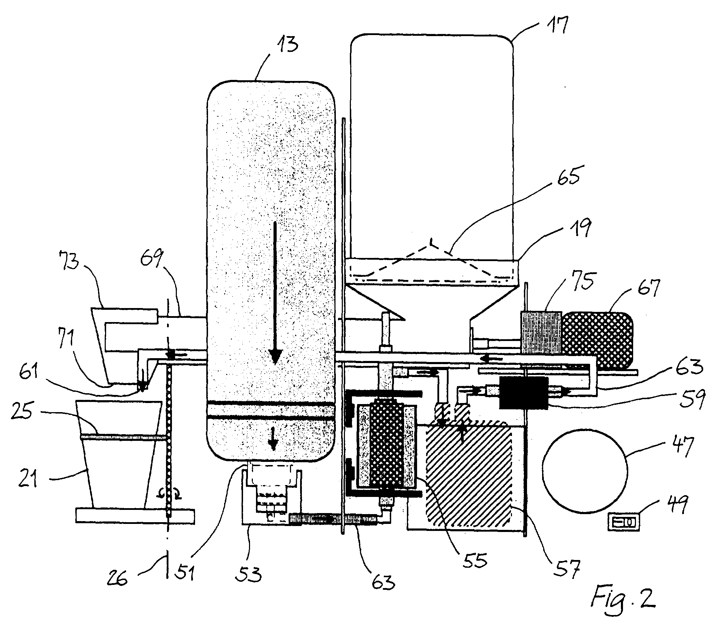

In **Figur 2** ist das im Innern des Automaten gemäss Figur 1 si8ch befindliche System schematisch aufgezeigt. Da Gerät kann über den Hauptschalter 49 ein und ausgeschaltet werden. Die Heisswasseraufbereitung umfasst in Flussrichtung des Wassers folgende Elemente: Frischwasser-Vorratsbehälter 13, Anschlussventil 51 am Frischwasserbehälter 13, damit zusammenwirkendes Anschlussstück 53 auf der Geräteseite, Wasserpumpe 55, Boiler 57, Magnetventil 59, Wasserhahn oder Austrittöffnung 61, sowie die diese Elemente verbindende Verbindungsleitungsstücke 63. Dieses Aufbereitungssystem arbeitet wie folgt: Auf Tastendruck (z.B. Taste 37, Figur 1) pumpt die Wasserpumpe 57 während einer durch eine nicht dargestellte elektronische Steuerung bestimmten Zeit die gewünschte Wassermenge durch das System. Während dem die Pumpe 55 arbeitet ist das Magnetventil 59 geöffnet. Frischwasser wird aus der Flasche 13 in den Boiler 57 gepumpt. Dort wird das aufgeheizte Wasser verdrängt und daher durch die Verbindungsleitung 63 in Richtung Hahn 61 gedrückt, wo das heisse Wasser in einem Strahl in den bereitgestellten Becher 21 strömt. Anschliessend wird die Pumpe 55 angehalten und das Magnetventil 59 geschlossen. Da nun der Inhalt des Boilers 57 wenigstens teilweise durch kühles Frischwasser aus der Flasche 13 ersetzt ist, weist er ein unter einem Sollwert für die Boilertemparatur liegende Temperatur auf. Daher wechselt das Anzeigelämpchen 41 (Figur 1) auf rot und der Thermostat (nicht dargestellt) im Boiler 57 schaltet die Heizstäbe solange zu, bis die Solltemperatur wieder überschritten ist. Nun steht wieder eine Portion Heisswasser für den Konsumenten bereit. Daher wechselt das Anzeigelämpchen 41 auf grün.

Durch die Erwärmung des Frischwassers dehnt sich dieses aus. Damit diese Ausdehnung nicht ein Tropfen des Hahns 61 verursacht, ist das Magnetventil 59 zwischen Boiler 57 und Hahn 61 angeordnet. Da sowohl die Membranpumpe 55 als auch das Magnetventil 59 die Leitungen 63 vor bzw. nach dem Boiler verschliessen, kann sich im Boiler 57 ein Überdruck aufbauen. Aus Sicherheitsgründen ist deshalb am Boiler ein mechanisches Überdruckventil vorgesehen (nicht dargestellt). Dank des Überdrucks gegenüber dem Umgebungsdruck kann eine Wassertemperatur von über 95 Grad Celsius erreicht werden.

Will der Konsument den Becher 21 entnehmen, drückt er auf die Taste 31, welche eine Verschwenkung des Bügels 25 um die Achse 26 bewirkt. Nun ist der Becher 21 nicht mehr eingeklemmt und kann entnommen werden. Steht der Bügel 25 in dieser geöffneten Stellung, verhindert die elektronische Steuerung das Öffnen des Magnetventils 59 und das Betätigen der Pumpe 55. Der Bügel 25 muss auch vor einer zweiten Füllung eines einzelnen Gefässes geöffnet und wieder geschlossen werden, da sonst die Elektronik davon ausgeht, dass das bereitstehende Gefäss 21 bereits voll ist.

Um eine Portion Kaffeepulver in den Becher zu geben, sind in Förderrichtung folgende Komponenten vorgesehen: Ein Vorratsbehälter 17, ein Anschlussstutzen 19 mit einem Aromaverschlussöffner 65, an den Stutzen 19 anschliessend eine durch den Elektromotor 67 angetriebene Förderschnecke (nicht dargestellt) in einem die Förderschnecke umfangenden Förderkanal 69, eine Zufuhröffnung 71 neben dem Hahn 61, in welcher der Förderkanal 69 endet. Die Zufuhröffnung ist in bekannter Weise unter einer Portionenkammer 73 angeordnet und mit einer Verschlussklappe verschlossen, um eine Portion Kaffeepulver zurückhalten zu können und den Förderkanal 69 vor vom Gefäss 21 aufsteigender Feuchtigkeit zu schützen.

Lässt der Konsument einen Kaffee aus dem Gerät, so treten diese Komponenten des Gerätes folgendermassen in Aktion: Der Elektromotor 67 wird während einer bestimmten Dauer tätig und treibt die Förderschnecke an. Die Umdrehungszahl des Motors 67 wird dabei durch ein Getriebe 75 reduziert. Die Betriebszeit und dadurch die Anzahl von Umdrehungen der Förderschnecke wird gemäss der gewünschten Menge an Kaffeepulver durch die Steuerung bemessen. Die Portion Kaffeepulver sammelt sich in der Portionenkammer 73 an und wird anschliessend durch kurzzeitiges Öffnen der Verschlussklappe durch die Zufuhröffnung 71 in den Becher 21 fallengelassen. Parallel dazu und/oder anschliessend wird das Heisswasser wie oben beschrieben zugeliefert. Da unterschiedliche Portionen gewählt werden können und damit die Kaffeepulverportionen in der Portionenkammer 73 nicht verklumpen wird die Kaffeepulverportion erst nach Tastendruck (Taste 33 oder 35, Figur 1) in die Portionenkammer 73 gefördert.

Der Vorratsbehälter 13 für Frischwasser ist eine 1,5 l PET-Flasche mit einem auf das Normgewinde der Ausgussöffnung aufgeschraubten Anschlussventil 51. Diese steht mit der Ausgussöffung nach unten im Flaschenfach 15 (Fig. 1). Das Anschlussventil 51 wird weiter unten beschrieben. Der Vorratsbehälter 17 für Granulat ist eine handelsübliche Kaffeeextraktdose. Diese steht ebenfalls mit der Öffnung nach unten in einem Anschlussstutzen 19.

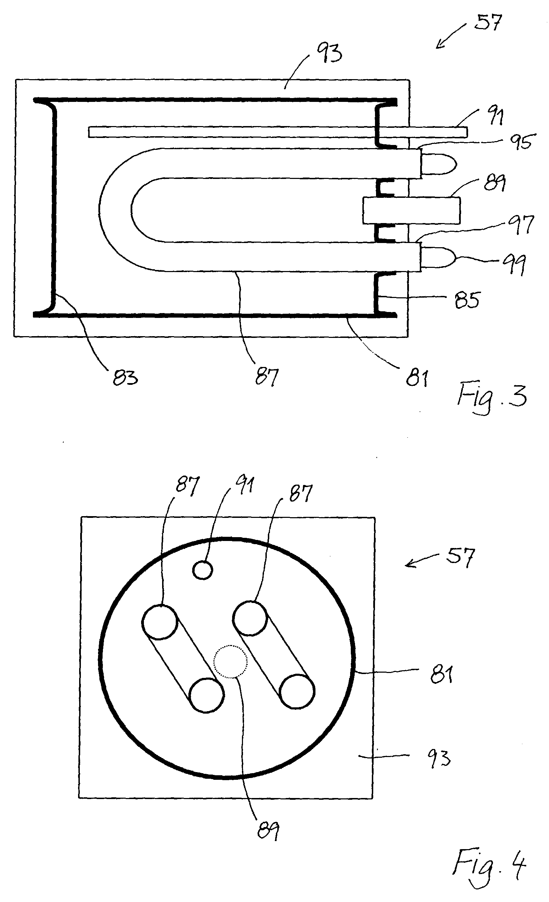

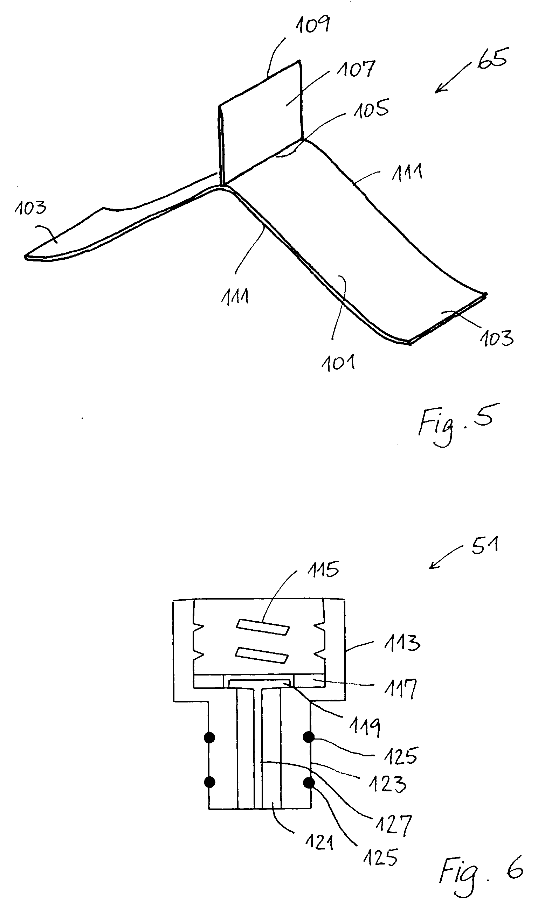

In den **Figuren 3 und 4** ist das Herzstück des Geräts, der Boiler 57 dargestellt. Der Boiler 57 umfasst einen konservendosenartigen Behälter von ca. 3,5 dl Inhalt, mit einer umlaufenden Wandung 81 und einem Bodenteil 83 sowie einem Deckelteil 85. Im Deckelteil 85 sind Ausnehmungen vorgesehen, durch welche die Enden eines oder zweier Heizelemente 87, ein Kaltwasseranschluss 89 und ein Heisswasseranschluss 91 hindurchreichen. Der konservendosenartige Behälter ist von einem thermisch isolierenden Kunststoffschaum 93 umgeben. Das Heizelement 87 ist haarnadelförmig. Die beiden Enden 95,97 des gebogen verlaufenden Heizstabes sind nebeneinander und gleich gerichtet, während der Heizstab dazwischen eine U-förmige Schlaufe beschreibt. Beide Enden 95,97 des Heizstabes sind mit einer Stecklamelle 99 versehen, an welche eine Stromzuleitung angeschlossen werden kann. Der Kaltwasseranschluss 89 besitzt seine Wasserzutrittöffnung auf der Deckelteilseite des Behälters. Das frische Wasser tritt dort durch ein Verteildüse in den Innenraum des Behälters ein, so dass dessen Inhalt möglichst gleichmässig gegen das Bodenteil 83 verdrängt wird. Der Heisswasseranschluss 91 besitzt seine Öffnung nahe des Bodenteils 83, so dass möglichst viel heisses Wasser aus dem Boiler 57 gedrängt wird, bevor gemischtes und daher lauwarmes Wasser diese Öffnung erreicht. Der Behälter kann in beliebiger Richtung montiert sein. Das Bodenteil 83 kann auch oben angeordnet sein.

Die einzelnen Heizelemente 87 sind für eine Versorgungsspannung von 12 Volt ausgelegt. Für den Einsatz bei 24 Volt Versorgungsspannung sind daher, wie in der Fig. 4 dargestellt, zwei solche Heizelemente 87 vorgesehen. Die Ausnehmungen für die Heizstabenden 95,97 im Deckelteil 85 können für die beiden Varianten mit einem oder zwei Heizelementen 87 jeweils unterschiedlich angeordnet sein: Bei einem Heizelement mit zwei Ausnehmungen, bei zwei Elementen mit vier Ausnehmungen. Es können aber auch alle Deckelteil 85 die gleichen Ausnehmungen aufweisen. In diesem Fall können jeweils zwei Ausnehmungspaare mit einem bestimmten Abstand zwischen den Ausnehmungen so angeordnet sein, dass von beiden Paaren eine Ausnehmung auf einer Linie durch den Mittelpunkt des Deckelteil 85 liegen, und diese zueinander den gleichen Abstand aufweisen. Die Ausnehmungen auf dem Durchmesser des Deckelteils 85 können dadurch bei beiden Varianten benutzt werden, während die beiden übrigen Ausnehmungen bei der 12 Volt Variante verschlossen werden oder bleiben müssen. Diese Anordnung dient insbesondere dazu, dass mit einem Stanzwerkzeug mit lediglich zwei entfernbaren Stempeln beide Varianten von Deckelteilen hergestellt werden können.

**Figur 5** zeigt den im Anschlussstutzen 19 für den Kaffeepulvervorratbehälter 17 anzuordnenden Öffner 65. Ein Blech- oder Kunststoffstreifen 101 beschreibt eine Wölbung oder einen Berg. Die Enden 103 des Streifens 101 bilden den talseitigen Rand, die Mitte 105 zwischen den Enden 103 die Bergspitze. Die Bergflanken können dabei gewölbt oder ebenflächig sein. Die Bergspitze 105 ist vorteilhaft ein Grat. Auf den Grat 105 ist eine Rippe 107 angeordnet, welche parallel zum Grat 105 verläuft und gleich lang ist wie dieser. Die Rippe 107 liegt in der mittelsenkrechten Ebene der Strecke zwischen den beiden Enden 103 des Streifens 101. Die nach oben gerichtete Kante 109 der Rippe 107 ist scharf. Wird nun die straff auf die Öffnung einer Dose 17 aufgebrachte Folie eines Aromaverschlusses über diesen Öffner hinabgesenkt, durchstösst die scharfe Kante 109 der Rippe 107 diese Folie etwa auf einer Durchmesserlinie der Dosenöffnung. Die eine Hälfte und die andere Hälfte der Verschlussfolie werden dann durch die Bergflanken des Streifens 101 auseinandergedrängt. Dabei reisst die Folie etwa entlang der Längskanten 111 des Streifens 101 auf. Die Folie kann daher neben dem Streifen 101 gegen die Auflageebene der Enden 103 abgesenkt werden, während sie im Bereich des Streifens 101 durch die Bergflanken in das Doseninnere gestossen wird. Dadurch öffnet sich eine Austrittöffnung im Dreieck Grat 105 und Streifenenden 103, durch welche Dreiecke der Doseninhalt in eine unter dem Grat 105 angeordnete Öffnung in den Förderkanal 69 gelangen kann.

Das Anschlussventil 51 für den Anschluss der Wasserflasche 13 an den Heisswasseraufbereiter ist in **Figur 6** schematisch dargestellt. Die Schnittzeichnung zeigt einen Ventilkörper 113 mit einem Innengewinde 115, welches wie das Gfewinde eines Flaschendeckels auf das Aussengewinde einer Normflasche passt. Gegenüber dem Öffnungsrand der Flasche ist im Ventilkörper 113 eine Dichtung 117 angeordnet, welche mit dem Öffnungsrand zusammen die Flasche und das Anschlussventil gegeneinander dichtet. Ist der Ventilkörper 113 aus Kunststoff, kann die Dichtung einstückig mit diesem ausgebildet sein. Anders als ein Flaschendeckel weist das Anschlussventil aber gegenüber der Flaschenöffnung eine durch eine Kappe 119 verschlossene Ventilöffnung 121 auf. Die Ventilöffnung 121 ist röhrenförmig ausgebildet. Die Röhrenwandung 123 findet einen festen Sitz im Anschlussstück 53 im Heisswasseraufbereiter. Um den Sitz gegenüber Vibrationen unempfindlich zu machen, sind zwei zueinander beabstandete O-Ringe 125 vorgesehen, welche die Röhrenwandung umlaufen. Die Kappe 119 wird durch nicht dargestellte Federmittel gegen die Schliessstellung gedrückt. An der Kappe 119 ist ein Stift 127 angeordnet, welcher durch die Ventilöffnung hindurch bis auf die der Kappe 119 gegenüberliegende Seite der Röhre reicht. Wird das Anschlussventil 51 in das Anschlussstück 53 eingesetzt, stösst ein Anschlag im Anschlussstück 53 den Stift 127 entgegen der Federkraft und damit die Kappe 119 aus der Schliessstellung in die Offenstellung.

Bei einem Automaten für heisse Getränke für den Einbau in ein Fahrzeug, welcher an die 12 bzw. 24 Volt Gleichstromquelle des Fahrzeugs angeschlossen werden kann, ist demnach ein Niedervoltboiler 57 vorgesehen, in welchem mit 1 bzw. 2 12 Volt Heizelementen ca. 3,5 dl Wasser aufgeheizt werden können. Diese Menge an Heisswasser genügt, um eine bis zwei Portionen Heisswasser innert kürzester Zeit in ein Gefäss 21 abgeben zu können. Die Steuerung der Wassermenge erfolgt über eine Pumpe 55 und ein Ventil 59. Als Frischwasservorrratsbehälter 13 dient eine handelsübliche PET-Flasche, auf deren genormte Ausgussöffnung ein Anschlussventil 53 aufgeschraubt ist. Als Vorratsbehälter 17 für das Kaffeeextraktganulat dient eine handelsübliche Kaffeepulverdose. Der Aromaverschluss der Dose wird während dem Aufstecken der Dose 17 auf den Anschlussstutzen 19 durch den im Stutzen 19 angeordneten Öffner 65 durchbrochen. Das Gefäss, in welches das heisse Wasser gefüllt wird, ist durch einen Bügel 25 unter dem Wasserhahn 61 festgehalten. Der Bügel 25 kann auf Tastendruck hin geöffnet und geschlossen werden.

## Patentansprüche

1. Heisswasseraufbereiter mit einem Anschlussstück (53) für den Anschluss eines Frischwasserbehälters (13) zur Bevorratung von Trinkwasser an eine Verbindungsleitung, der Verbindungsleitung (63), welche das Anschlussstück (53) mit einem Hahn (61) zum Auslassen des Wassers verbindet und dem Hahn (61), einem elektrischen Heizelement (87) zum Heizen des Trinkwassers zwischen Anschlussstück (53) und Hahn (61), einem Stromanschluss und Bedienungselementen (31 bis 39) zum Bedienen des Heisswasseraufbereiters, gekennzeichnet durch einen zwischen Anschlussstück (53) und Hahn (61) in die Verbindungsleitung (63) eingefügten Heisswasserbehälter (57) zur Erwärmung und Bevorratung von Heisswasser mit wenigstens einem Niedervolt-Heizelement (87).

2. Heisswasseraufbereiter nach Anspruch 1 mit einer Aufnahmeeinrichtung (23) für ein das Heisswasser empfangendes Gefäss, z.B. mit einer Halterung (25) für einen Becher (21), einem Anschlussstutzen (19) für einen Vorratsbehälter (17) für ein wasserlösliches Granulat, einer mit dem Anschlussstutzen (19) verbundenen Zuführeinrichtung (67,69) für das Granulat, insbesondere mit einer elektromotorisch angetriebene Förderschnecke, und einer Zufuhröffnung (71) für das Granulat in Nachbarschaft zum Hahn (61), dadurch gekennzeichnet, dass der Anschlussstutzen (19) zur Aufnahme des vom Heisswasseraufbereiter lösbaren Vorratsbehälters (17) für das Granulat einen Verschlussmechanismus aufweist, welcher dem eines Deckels einer handelsüblichen Dose, insbesondere einer Kaffeeextraktdose, entspricht.

3. Heisswasseraufbereiter nach Anspruch 2, dadurch gekennzeichnet, dass die Aufnahmeeinrichtung (23) für das Gefäss (21) mit einem beweglichen Bügel (25) ausgerüstet ist, welcher in einer ersten Stellung das Gefäss (21) hält und in einer zweiten Stellung das Gefäss (21) freigibt.

4. Heisswasseraufbereiter nach Anspruch 3, dadurch gekennzeichnet, dass der Bügel (25) um eine Achse (26) parallel zu einer Mittelachse durch die Öffnung des Gefässes (21) verschwenkbar ist.

5. Heisswasseraufbereiter nach einem der Ansprüche 3 oder 4, dadurch gekennzeichnet, dass ein durch die Bedienungselemente (31 bis 39) betätigbarer Aktor vorgesehen ist, um den Bügel (25) in die eine oder anderer Richtung zu verschwenken und in der verschwenkten Stellung zu halten.

6. Heisswasseraufbereiter nach einem der Ansprüche 2 bis 5, gekennzeichnet durch einen Öffner (65) im Anschlussstutzen (19), mit welchem ein Aromaverschluss des Vorratsbehälters (17) für das Granulat aufbrechbar ist.

7. Heisswasserbehälter nach Anspruch 6, gekennzeichnet durch einen Öffner (65) nach einem der Ansprüche 13 bis 15.

8. Heisswasseraufbereiter nach einem der Ansprüche 1 bis 7, mit einem Frischwasserbehälter und einem am Anschlussstück (53) anschliessbaren Anschlussventil (51) am Frischwasserbehälter (13), dadurch gekennzeichnet, dass der Frischwasserbehälter eine handelsübliche Mineralwasserflasche (13), z.B. eine PET-Flasche ist und das Anschlussventil (51) flaschenseitig ein Kupplungsteil (115), z.B. ein Gewinde, und eine Dichtung (117) aufweist, welches Kupplungsteil (115) sich mit der Norm-Flaschenöffnung verbinden lässt, und welche Dichtung (117) einen wasserdichten Anschluss an die Wasserflasche gewährleistet.

9. Heisswasseraufbereiter nach einem der Ansprüche 1 bis 8, gekennzeichnet durch eine Wasserpumpe (55) zur Förderung von Wasser vom Anschlussstück (53) zum Hahn (61), ein Ventil (59) zwischen Heisswasserbehälter (57) und Hahn (61) und eine Steuerung der Wasserpumpe (55) und des Ventils (59), welche regelt, dass bei einer Aktivierung der Wasserpumpe (55) das Ventil (59) öffnet und eine bestimmte, auf das Volumen des das Heisswasser empfangenden Gefässes (21) abgestimmte Menge Trinkwasser gefördert wird, sowie anschliessend das Ventil (59) wieder schliesst.

10. An einem passenden Anschlussstück (53) eines Heisswasseraufbereiters anschliessbares Anschlussventil (51) mit einem auf eine Normflasche (13) abgestimmten Kupplungsteil (115), z.B. einem Innengewinde, und einer Dichtung (117), welches Kupplungsteil (115) mit der Normöffnung einer handelsüblichen Getränkeflasche (13) verbindbar ist, und welche Dichtung (117) einen wasserdichten Anschluss an die Flasche (13) gewährleistet.

11. Verwendung von handelsüblichen Getränkeflaschen, insbesondere Mineralwasserflaschen, vorzugsweise PET-Flaschen, als Vorratsbehälter (13) für Trinkwasser in einem Niedervolt-Heisswasseraufbereiter.

12. Verwendung von handelsüblichen Dosen als Vorratsbehälter (17) für das Kaffeeextraktgranulat in einer Kaffeemaschine (11), insbesondere einer Niedervolt-Kaffeemaschine.

13. Öffner (65) für den Aromaverschluss aus einer Folie oder einem Papier bei handelsüblichen Kaffeeextraktdosen (17), welcher in einen Anschlussstutzen (19) oder Deckel für die Dose (17) einfügbar ist, mit einer Aufbrechspitze oder -kante (109) und zwei einander gegenüberliegenden von der Aufbrechspitze oder -kante (109) zurück und auseinander verlaufenden Spreizflächen (101).

14. Öffner (65) nach Anspruch 13, dadurch gekennzeichnet, dass die Aufbrechspitze oder -kante (109) einen Stamm (107) bildet, von welchem die Spreizflächen (101) V-förmig abstehen.

15. Öffner (65) nach Anspruch 13 oder 14, dadurch gekennzeichnet, dass die Aufbrechkante (109) eine Länge und die Spreizflächen (101) eine Breite von etwa einem Viertel bis einem Drittel der Öffnungsweite des zu öffnenden Aromaverschlusses aufweisen und die Auf brechkante (109) in Richtung der Breite der Spreizflächen (101) verläuft.

16. Verfahren zum Anschliessen eines mit einer über die Behälteröffnung gespannten Aromaverschlussfolie versiegelten Vorratsbehälters (17) für ein wasserlösliches Getränkeextrakt-Granulat an einen Anschlussstutzen (19) eines Getränkeautomaten (11), dadurch gekennzeichnet, dass der Vorratsbehälter (17) mit der Aromaverschlussfolie nach unten von oben über eine Aufbrechspitze oder -kante (109) im Anschlussstutzen (19) gesenkt und im Anschlussstutzen (19) verriegelt wird.

17. Verfahren nach Anspruch 16, dadurch gekennzeichnet, dass die Aromaverschlussfolie beim Absenken des Behälters durch die Aufbrechspitze oder -kante (109) teilweise zerschnitten wird und beim weiteren Absenken anschliessend die beiden Schnittkanten und die daran anschliessenden Folienabschnitte durch Spreizflächen (101) in entgegengesetzte Richtungen auseinandergespreizt werden.

18. Heisswasserbehälter (57) zur Erwärmung und Bevorratung von Heisswasser mit wenigstens einem Niedervolt-Heizelement (87).

19. Heisswasserbehälter (57) nach Anspruch 18, dadurch gekennzeichnet, dass das Niedervolt-Heizelement (87) haarnadelförmig und für eine Spannung von 12 Volt ausgelegt ist, wobei der Behälter (57) sowohl mit einem einzigen als auch mit zwei Heizelementen (87) ausgerüstet sein kann.

20. Heisswasserbehälter (57) nach Anspruch 18 oder 19, gekennzeichnet durch ein Inhaltvolumen zwischen 200 und 500 ml, vorzugsweise zwischen 250 und 400 ml, besonders bevorzugt zwischen 300 und 380 ml
